Europäisches Patentamt

European Patent Office

Office européen des brevets

(19)

(11) Numéro de publication: **0 146 481**
**B1**

(12) **FASCICULE DE BREVET EUROPEEN**

(45) Date de publication du fascicule du brevet: **18.05.88**

(21) Numéro de dépôt: **84420197.0**

(22) Date de dépôt:·**27.11.84**

(51) Int. Cl.⁴: **C 22 C 1/04,** B 22 F 1/00,
F 16 C 33/12, F 16 C 33/14

(54) **Coussinet fritte autolubrifiant et procédé de fabrication.**

(30) Priorité: **29.11.83 FR 8319433**

(43) Date de publication de la demande:
**26.06.85 Bulletin 85/26**

(45) Mention de la délivrance du brevet:
**18.05.88 Bulletin 88/20**

(84) Etats contractants désignés:
**AT CH DE FR GB IT LI**

(56) Documents cités:
**DE-B-1 082 416**
**DE-C- 445 169**
**FR-A-1 419 826**
**FR-A-1 565 007**
**GB-A-2 045 806 -**
**US-A-3 352 647**

(73) Titulaire: **Alliages Frittés METAFRAM
Tour Manhattan 6, Place de l'Iris
F-92400 Courbevoie (FR)**

(72) Inventeur: **Eudier, Michel
8, rue Octave Feuillet
F-75116 Paris (FR)**
Inventeur: **Youssef, Hassan
72, Chaussée Jules-César
F-95150 Taverny (FR)**

(74) Mandataire: **Séraphin, Léon et al
PECHINEY 28, rue de Bonnel
F-69433 Lyon Cedex 3 (FR)**

Courier Press, Leamington Spa, England.

**0 146 481**

## Description

La présente invention concerne le domaine des coussinets ou bagues flottantes employés dans les paliers à contact lisse pour pièces en mouvement relatif par rapport auxdits paliers, et plus articulièrement le domaine des coussinets autolubrifiants.

Les mérites relatifs des coussinets ou roulements poreux imprégnés d'huile obtenus par frittage sont décrits dans l'article de synthèse de G. C. PRATT "A review of sintered metal bearings: their production, properties, and performances" (POWDER METALLURGY, 1969, vol. 12, n° 24, pp. 356—385). Les performances de ce type de coussinets sont limitées par le mode de formation du film d'huile lors des démarrages, l'huile étant réabsorbée par le coussinet à chaque arrêt, et chaque démarrage entraînant alors des risques de grippage liés aux contacts métalliques entre l'arbre et le coussinet tant que le film d'huile n'est pas formé. D'après l'article cité ci-dessus, la perméabilité de la paroi du coussinet ou roulement a une certaine influence et une perméabilité faible correspondant à une porosité fine serait plus favorable.

En-dehors de ce risque de grippage au démarrage, si un arbre tourne de façon prolongée à l'intérieur d'un coussinet, et si on augmente la charge qu'il support et donc la pression qu'il exerce sur le coussinet, le film d'huile tend à se rompre par suite de son échauffement et de la pression supportée et des grippages sont produits.

La charge admissible est dans ce cas fonction de plusieurs paramètres et principalement de la vitesse relative entre l'arbre et le coussinet et de la nature de l'huile. Utilisant une loi expérimentale approximative, on caractérisé habituellement les coussinets par la valeur maximale du produit PV de la pression spécifique P par la vitesse linéaire relative V de la surface de l'arbre, la pression spécifique P étant le quotient de la charge totale appliquée F par le diamère de l'arbre d et par la longueur 1 du coussinet. Lorsqu'on dépasse la limite du produit PV caractéristique d'un coussinet donné, on constate que la température de l'huile augmente rapidement, que l'huile se détériore et qu'on obtient un grippage plus ou moins violent.

L'article de synthèse de G. C. PRATT indique à la page 380 que, pour les coussinets métalliques poreux imprégnés d'huile, une capacité maximale théorique PV de 50 000 $lbf/in^2 \times ft/min$ (1,85 MPa$\times$m/s) est souvent indiquée, et qu'en pratique on peut obtenir une durée de vie de seulement 500 h au niveau de PV=20 000 $lbf/in^2 \times ft/min$ (0,74 MPa$\times$m/s).

Le document DE—C 445 169, publié en 1927, décrit la fabrication de coussinets antifriction frittés ayant par exemple comme composition: Cu 77% Sn 4,5%, composé SnSb 13,5% (Sn et Sb y étant présents en quantités sensiblement égales), et graphite 5%. Le composé intermétallique SnSb peut être remplacé par $Cu_3Sn$ ou $Cu_3Sb$. Les performances des coussinets obtenus ne sont pas indiquées et ces coussinets ne semblent pas avoir donné lieu à des développements industriels. Abstraction faite du graphite qui joue un rôle distinct, il semble comme les essais décrits plus loin le montreront que la composition indiquée ne pouvait pas conduire à des coussinets frittés à PV fortement amélioré à cause de la teneur trop élevée en Sb et éventuellement de son mode d'introduction.

Dans l'invention, on s'est proposé de réaliser des coussinets frittés autolubrifiants en bronze à l'antimoine de produit PV fortement amélioré.

Expose de l'invention

La présente invention concerne un coussinet fritté autolubrifiant constitué d'une matrice poreuse en bronze à l'antimoine imprégnée d'huile, cette matrice comportant des phases dispersées plus dures que ladite matrice. Selon l'invention, le coussinet a pour composition:

Sb 1,5 à 4%
Sn 5 à 10%
    avec Sn/Sb=1,3 à 3,5
Cu et éventuellement Pb et/ou Bi et/ou Zn et impuretés: le solde
avec Pb+Bi limité à 5% et Zn limité à 5%,

et ses phases dispersées consistent chacune en une auréole de diffusion en continuité avec la matrice, ladite auréole entourant une microporosité et ayant une composition intermétallique ternaire (Cu, S, Sb).

De façon typique, ces auréoles de diffusion ont une dureté $H_{v10g}$ supérieure ou égale à 200. Et 80% au moins de ces phases dispersées ou auréoles ont un diamètre ou une épaisseur comprise entre 3 et 20 µm.

L'invention concerne aussi un coussinet fritté autolubrifiant tel que défini à la revendication 3.

Comme on le verra à propos du procédé de fabrication, et dans les exemples, la structure particulière et les performances des coussinets de l'invention semblent liées au rapport Sn/Sb qui conditionne la possibilité de former les phases dispersées ayant les caractéristiques indiquées, et, lorsque ce rapport est favorable, à un nombre suffisant de css phases dispersées, dépendant des niveaux de teneurs en Sn et Sb et du mode d'introduction de Sb.

Le coussinet de l'invention a un "PV max" compris entre 3 et plus de 6 MPa$\times$m/s, alors que les coussinets autolubrifiants en bronze connus ont un "PV max" de l'ordre de 2 à 2,5 MPa$\times$m/s, et le pic de température du coussinet au démarrage est fortement atténué ou supprimé. A l'aide des études de structures et de composition et des observations micrographiques, la demanderesse à formulé une explication pour la structure observée et pour l'amélioration surprenante du comportement des coussinets ainsi constatée. Les phases dispersées comportant une auréole de diffusion plus dure que la matrice

2

résultent du frittage d'un ensemble de poudres, dont la composition est susceptible de donner localement par diffusion des compositions intermédiaires entre celle d'un composé intermétallique (composé correspondant à un maximum relatif du solidus) et celle d'un eutectique. Les auréoles de diffusion observées sur une coupe de coussinet brut de frittage contiennent des cristaux ou phases distinctes à fort grossissement, symptomatiques de telles compositions.

Elles sont dans cet état beaucoup plus dures que la matrice, ainsi dans le cas d'un coussinet de l'essai n° 3, on a observé $H_{V10g}$ 300 à 600 pour les auréoles de diffusion et $H_{V10g}$ 60 à 70 pour la matrice en bronze. Lorsque le coussinet est rodé, il est probable que par endroits et de façon assez bien répartie certaines auréoles dures affleurent et se trouvent légèrement en relief par rapport à la surface de la matrice rodée. Quand la coussinet est ensuite utilisé, les contacts métalliques entre l'arbre et le coussinet sont lors du démarrage sans doute restreints à ces très petits affleurements d'auréoles dures, ce qui entraîne un échauffement très rapide de ces affleurements jusqu'à leur fusion locale, cette fusion provoquant alors la quasi-disparition du frottement et la solidification immédiate des portions d'auréoles fondues et déformées. Il paraît possible et même probable qu'alors les portions d'auréoles de diffusion de compositions locales intermédiaires entre celle d'un composé intermétallique et celle d'un eutectique affleurant l'alésage rodé du coussinet ou se trouvant en très léger relief par rapport à cet alésage subissent une fusion pâteuse et conservent par la suite une structure amorphe ou de "verre métallique", leur échauffement localisé étant à chaque fois suivi d'un refroidissement très rapide par suite de la disparition du frottement et du pompage de chaleur par la masse du coussinet. On aurait ainsi probablement affaire alors à des contacts ponctuels durs se ramollissant dès les premiers frottements, de sorte que ces frottements sont immédiatement diminués ou annulés.

Le composé intermétallique qui semble participer à la formation des auréoles de diffusion des coussinets en bronze de l'invention est essentiellement: $Cu_{12}Sn_7Sb_3$ (composition pondérale approximative: Cu 39%, Sn 42%, Sb 19%).

On obtenu des résultats analogues mais un peu moins favorables dans le cas de compositions Cu-Sn-Ni, les composés intermétalliques intervenant alors étant $Ni_3Sn$.

On peut remarquer que le coussinet de l'invention se distingue fortement des coussinets de l'art antérieur. En particulier, dans le coussinet de l'invention, les phases dispersées dures, dont certaines affleurent l'alésage ou se trouvent légèrement en relief après rodage, provoquant sans doute des frottements locaux suivis de fusions pâteuses qui suppriment ces frottements, ont un rôle bien différent de celui des composés intermétalliques durs du document DE—C—445 169. Par ailleurs, la création supposée "in situ", lors de l'utilisation des coussinets de l'invention, de très petites portions d'alliage amorphe en léger relief, apparaît comme une conséquence de la structure des coussinets de l'invention et une explication vraisemblable de leurs résultats surprenants, et si cette hydrothèse explicative est vérifiée, il s'agit alors d'une utilisation tout à fait nouvelle des propriétés des alliages amorphes, dans laquelle des phases dispersées susceptibles de donner par fusion et refroidissement rapide des alliages amorphes se trouvent en situation de se transformer ainsi sur l'alésage d'un coussinet grâce à leur dureté à l'état brut de frittage. Pour une composition globale donnée, ce type de structure est ici obtenu par métallurgie des poudres, et on peut remarquer qu'il ne serait pas possible de l'obtenir par fusion et coulée dans le cas des compositions étudiées à titre d'exemple dans la présente description, ces compositions donnant par fusion et coulée suivie d'un refroidissement assez rapide comme il est habituel des alliages pratiquement homogènes à la température ordinaire.

L'invention a aussi pour objet le procédé de fabrication du ou des coussinets frittés autolubrifiants qui viennent d'être définis. Ce procédé diffère des procédés connus par le choix de la composition globale des poudres mélangées et par la sélection des conditions de frittage permettant d'atteindre les qualités déjà décrites.

Dans ce procédé de fabrication, on mélange intimement au moins deux poudres métalliques d'analyses différentes ainsi qu'éventuellement un lubrifiant de compression -dont la masse n'est pas prise en compte dans les calculs de composition globale-, on comprime ces poudres sous forme d'ébauches, on chauffe éventuellement ces ébauches comprimées à température inférieure à 400°C pour éliminer le lubrifiant de compression, on traite thermiquement ces ébauches en atmosphère réductrice pour réaliser le frittage, on refroidit les pièces frittées, on les calibre par compression dans un outillage de calibrage, et on imprègne d'huile les coussinets obtenus, selon les techniques connues de l'homme de métier. Dans le procédé de l'invention, le choix des compositions globales des poudres en % en masse est:

Sb 1,5 à 4%
Sn 5 à 10%
     avec Sn/Sb=1,3 à 3,5
Cu et éventuellement Pb et/ou Bi et/ou Zn et impuretés: le solde
     avec Pb+Bi limité à 5% et Zn limité à 5%,

et le traitement thermique de frittage en atmosphère réductrice est effectué entre 680 et 840°C avec maintien à température pendant 5 à 120 mn, et de préférence centre 740 et 820°C avec maintien en température pendant 5 à 45 mn.

Les additifs éventuels Pb, B, Zn sont connus pour les bronzes à l'étain et les bronzes à l'étain+nickel, par exemple pour améliorer l'aptitude au décolletage. L'emploi de tels additifs est possible dans le cas des bagues ou coussinets de la présente invention.

De façon à favoriser la formation des phases comportant une auréole de diffusion auxquelles semblent participer le composé intermétallique $Cu_{12}Sn_7Sb_3$ et la dispersion de ces phases dans la matrice, les poudres de Sn ou alliages et de Sb utilisées sont de préférence fines, avec une granulométrie inférieure à 0,06 mm, c'est-à-dire par exemple sous forme de poudres passant au tamis 230 ASTM ou à um tamis plus fin.

Essais et commentaires

L'invention sera mieux comprise à partir des essais qui vont être décrits, du tableau qui en rassemble les principaux résultats, et des figures ou dessins qui les illustrent.

La figure 1 représente l'évolution de la température d'un coussinet classique et d'un coussinet selon l'invention à partir du démarrage.

La figure 2 représente une coupe micrographique radiale (G=690) d'un coussinet selon l'invention (essai n° 3 bis) en reproduction par photocopie.

La figure 3 schématise certains détails caractéristiques de la structure du coussinet selon l'invention, repris sur la coupe micrographique de la figure 2.

Essai n° 1

On a mélangé pour obtenir l'alliage "1" de composition globale en % en masse Cu 90%—Sn 10%:

50% de poudre de bronze à 10% d'étain (Cu-Sn 10%) passant au tamis 100 ASTM (ouverture 0,149 mm)

45% de poudre de cuivre passant au même tamis

5% de poudre d'étain passant au tamis 350 ASTM (ouverture 0,04 mm)

et en plus, comme il est habituel, 0,7% de poudre de stéarate de zinc ajouté comme lubrifiant de compression.

L'ensemble des poudres mélangées a été comprimé sous forme d'ébauches de coussinets ou bagues sous une pression de 150 MPa, ce qui à donné pour les ébauches comprimées une masse spécifique de l'ordre de 6,3 g/cm³.

Les comprimés obtenus ont été d'abord chauffés pendant environ 20 minutes à 350°C pour éliminer le lubrifiant de compression. L'ajout d'un lubrifiant de compression et/ou ce chauffage préalable ont en général un caractère facultatif.

Les comprimés ont ensuite été chauffés à 780°C pendant 15 minutes dans une atmosphère d'hydrogène et d'azote obtenue par décomposition de l'amoniac, puis refroidis sans précaution particulière.

Les pièces obtenues ont alors été recomprimées dans un outillage de calibrage ainsi qu'il est d'usage dans la fabrication des coussinets autolubrifiants en bronze. Les coussinets ou bagues ont alors été impregnés d'huile minérale de viscosité 100 centistokes à 40°C. On a obtenu ainsi une pluralité de coussinets autolubrifiants de dimensions unitaires: diamètre intérieur 25 mm×diamètre extérieur 32 mm×longueur 120 mm.

On a testé ces coussinets au moyen d'un dispositif comportant un arbre en acier de dureté $H_{Rc}$ 50 et de diamètre d=25 mm donnant un jeu fonctionnel diamétral de 35 μm entre l'arbre et chaque coussinet. Ce dispositif permettait deux vitesses de rotation, 1500 et 3000 tours/mn, correspondant à deux vitesses linéaires V relatives an niveau des surfaces de l'arbre et du coussinet: 2 et 5 m/s. La charge appliquée pouvait varier de 15 à 100 daN, donnant une variation possible de la pression spécifique de 0,3 MPa à 2 MPa et une variation possible du produit PV de 0,6 MPa×m/s à 8 MPa×m/s.

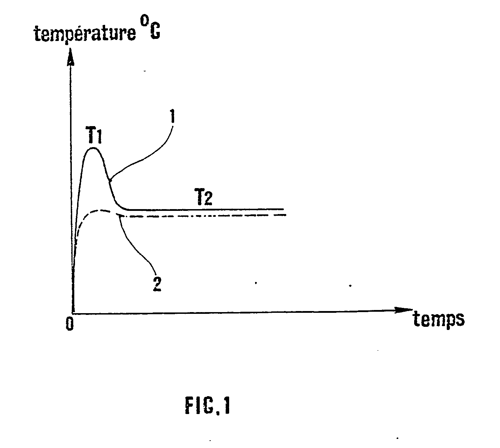

Le dispositif est équipé d'une mesure de température de la surface extérieure du coussinet en cours de test au moyen d'un thermocouple de contact. Chaque coussinet est soumis à la même séquence de tests successifs, en commençant par la vitesse la plus faible (12 m/s) avec des charges successives croissantes correspondant à des pressions spécifiques successives de 0,3—0,6—0,9—1,2—1,5—1,8 et 2 MPa, et en poursuivant éventuellement avec la vitesse la plus forte (4 m/s) et les mêmes charges et pressions spécifiques successives. Lors de chaque test, on a mesuré (figure 1) la température $T_1$ du coussinet après démarrage (O), les coussinets classiques (courbe 1) donnant à ce moment là un pic de température plus ou moins prononcé tant que la film hydrodynamique d'huile n'est pas formé, et on a mesuré la température d'équilibre $T_2$ obtenue ensuite, la durée de l'essai étant d'au moins 30 mn. On a arrêté la série d'essais au niveau "PV max" qui entraîne une température de 90°C, ce niveau étant souvent repéré par intrapolation entre un PV encore satisfaisant et le PV immédiatement supérieur qui conduit à une élévation de température plus importante et à un grippage. Les "PV max" des coussinets du même essai sont voisins, ainsi que les températures $T_1$ et $T_2$ caractéristiques du comportement du démarrage au niveau PV encore satisfaisant, et ce sont les valeurs moyennes de PV max et de $T_1$ (°C)/$T_2$ (°C) qui sont portées dans le tableau 1 rassemblant les résultats.

Dans l'essai n° 1, on a éprouvé 3 coussinets, et on a noté un "PV max" moyen de 2,5 MPa×m/s et un rapport d'échauffements $T_1/T_2$ de 1,5. Cet essai n° 1 concernant un coussinet en bronze classique sert de référence.

Essai n° 2

On a mélangé pour obtenir l'alliage "2" de composition globale Cu 92%—Sn 6%—Sb 2%:

30 % de poudre de bronze à 10 % d'étain passant au tamis 100 ASTM (0,149 mm)

65 % de poudre de cuivre passant au même tamis

3 % de poudre d'étain et 2 % de poudre d'antimoine, poudres passant toutes deux au tamis 350 ASTM (0,04 mm).

On a appliqué le même procédé de fabrication que dans l'essai n° 1, et on a testé les coussinets obtenus comme précédemment. On a ainsi éprouvé 3 coussinets, les résultats portés dans le tableau 1, sont un "PV max" moyen surprenant de 5 MPa×m/s et un rapport $T_1/T_2$ moyen de 1,3 seulement, traduisant un échauffement moindre au démarrage.

La proportion de composé intermétallique $Cu_{12}Sn_7Sb_3$ (Cu 39%—Sn 42%—Sb 19%) dont la composition globale est théoriquement capable a été calculée: elle est ici réglée par la quantité d'antimoine Sb=2%, Sn/Sb=3 étant un peu supérieur au quotient Sn/Sb voisin de 2,3 dans ce composé intermétallique, et cette proportion est voisine de 10 %.

Essai n° 3

On a mélangé pour obtenir l'alliage "3" de composition globale Cu 92%—Sn 5%—Sb 3%:

92 % de poudre de cuivre passant au tamis 100 ASTM (ouverture 0,149 mm)

8 % de poudre d'alliage Sn 62,5 %—Sb 37,5 %, obtenue par broyage mécanique de l'alliage fondu donnant des particules de dimensions inférieures à 10 μm environ.

On a appliqué le même procédé de fabrication que précédemment, et on a testé 5 coussinets. Les résultats sont: "PV max" moyen 6 MPa×m/s et rapport $T_1/T_2$ voisin de 1, c'est-à-dire pas d'échauffement global du coussinet au démarrage (courbe 2 de la figure 1).

Essai n° 3 bis

On a mélangé pour obtenir l'alliage "3 bis" de même composition globale que l'alliage "3":

33 % de poudre de bronze à 10 % d'étain passant au tamis 100 ASTM (0,149 mm)

62 % de poudre de cuivre passant au même tamis

2 % de poudre d'étain et 3 % de poudre d'antimoine, poudres passant toutes deux au tamis 350 ASTM (0,04 mm).

On a appliqué le même·procédé de fabrication que précédemment, et on a testé 5 coussinets. Les résultats sont les mêmes que pour l'essai n° 3.

Dans les essais n° 3 et 3 bis, le rapport Sn/Sb est de 1,67 et la proportion de composé intermétallique $Cu_{12}Sn_7Sb_3$ dont la composition globale est théoriquement capable est réglée par la quantité d'étain et égale à environ 5/0,42=12 %.

Cette proportion un peu plus grande que dans l'essai n° 2 est peut-être un indice qui explique en partie les résultats meilleurs obtenus.

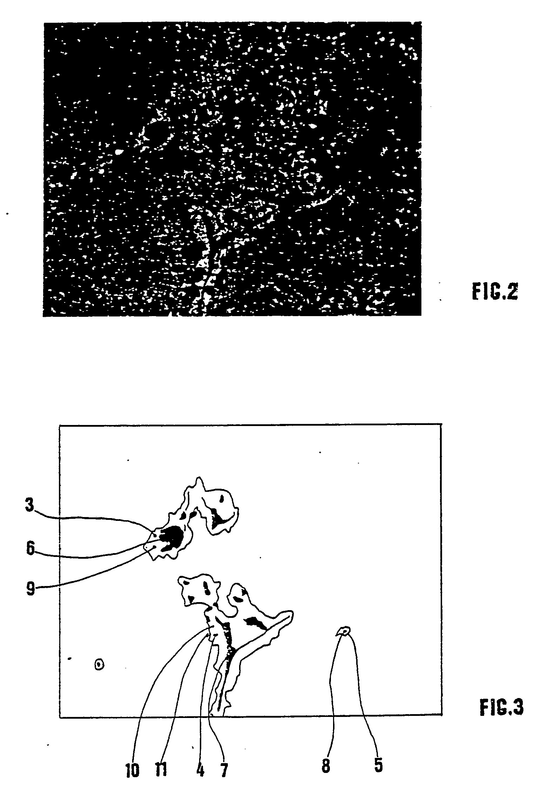

Une coupe micrographique radiale (G=690) de l'un des coussinets "3 bis" est reproduite sur la figure 2. On y voit, comme repris sur le schéma de la figure 3, que la structure est un aggloméral de grains plus ou moins bien soudés, contenant des phases (3), (4) ou (5) de formes diverses présentant parfois sur cette coupe un vide central (6), (7) ou (8), plusieurs de ces phases étant bordées par des auréoles plus claires.

L'observation micrographique permet de dire qu'il s'agit d'auréoles de diffusion relles que (9) et (10) en continuité avec la matrice (11), que ces auréoles claires (9) ou (10) contiennent par endroits des petits cristaux, et des mesures de microdureté locale montrent que auréoles sont très dures: $H_{V10g}$ 300 à 600 vis-à-vis de $H_{V10g}$ 60 à 70 pour la matrice. Il est possible que les vides centraux ou microporosités tels (6) ou (7) entourés d'auréoles (9) ou (10) correspondant à la fusion de l'antimoine ayant lieu vers 630°C et l'étain ayant déjà fondu et entièrement diffusé à ce moment là. L'amélioration du comportement des coussinets serait ainsi à rattacher à la présence de ces phases dispersées comportant des auréoles de diffision, dont au moins 70 % ont un diamètre ou une épaisseur comprise entre 2 et 20 μm et un écartement comprise entre 20 et 100 μm. .

Essai n° 4

On a mélangé pour obtenir l'alliage "4" de composition globale Cu 92 %—Sn 3 %—Sb 5%:

30 % de poudre de bronze à 10 % d'étain passant un tamis 100 ASTM (0,149 mm)

65 % de poudre de cuivre passant au même tamis

5 % de poudre d'antimoine passant au tamis 350 ASTM (0,04 mm).

On a appliqué le même procédé de fabrication que précédemment et on a testé 4 coussinets. Les résultats sont: "PV max" moyen 2 MPa×m/s et $T_1/T_2$ moyen 1,7.

Ces résultats mauvais ont été mis en relation avec le rapport Sn/Sb égal à seulement 0,6, la fusion ou la diffusion simultanée de Sn et Sb ayant peu de chances de donner des phases contenant le composé intermétallique $Cu_{12}Sn_7Sb_3$ dans lequel Sn/Sb=2,3 bien que la proportion calculée de composé $Cu_{12}Sn_7Sb_3$ dont la composition globale est théoriquement capable soit de 3/0,42=7 %.

Essai n° 4 bis

On a préparé un alliage "4 bis" de façon analogue à l'alliage "4", avec une teneur en Sb de 7 % au lieu de 5 %. Les coussinets frittés obtenus n'étaient pas utilisables parce que trope fragiles.

Essai n° 5

On a mélangé pour obtenir l'alliage "6" de composition globale Cu 87 %—Sn 7 %—Sb 3%—Ni 3%:

30 % de poudre de bronze à 10 % d'étain passant au tamis 300 ASTM (ouverture 0,048 mm)

60 % de poudre de cuivre passant au tamis 100 ASTM (0,149 mm)

2 % de poudre d'étain passant au tamis 350 ASTM (0,04 mm)

3 % de poudre d'antimoine passant au même tamis

5 % de poudre d'alliage Ni 60 %—Sn 40 % passant au même tamis.

Cet alliage à sensiblement la composition du composé intermétallique $Ni_3Sn$.

L'interprétation est la suivante: les composés intermétalliques qui peuvent intervenir sont à la fois $Cu_{12}Sn_7Sb_3$ et $Ni_3Sn$. L'étain compris dans l'alliage $Ni_3Sn$ y reste pour l'essentiel et donne théoriquement 5% de phase intermétallique.

L'étain présent par ailleurs dans la composition de départ, sous forme de bronze à 10 % d'étain et sous forme de poudre d'étain, intervient avec l'antimoine dans la formation de composé $Cu_{12}Sn_7Sb_3$, la proportion Sn/Sb étant alors de 5/3=1,67. La proportion de composé intermétallique $Cu_{12}Sn_7Sb_3$ est alors réglée par Sn et la composition est théoriquement capable de donner 5/0,42=12 % de ce composé intermétallique. La composition globale est ainsi théoriquement capable de donner au total 12+5=17 % de phases intermétalliques des deux types cités.

Cet essai comparé à l'essai "3 bis" montre que l'addition supplémentaire de Ni n'entraîne qu'une petite amélioration des performances, n'en justifiant pas le surcoût.

La présente invention s'applique dans son principe essentiel à d'autres alliages que les bronzes, et dans toutes ses caractéristiques aux coussinets ou bagues en bronze dont les diamètres intérieurs sont habituellement compris entre 2 mm -il s'agit alors de micro-coussinets- et 150 mm.

TABLEAU 1

| N° de l'essai | Composition globale des coussinets (% en masse) | | | | $\dfrac{Sn}{Sb}$ | $\dfrac{Ni}{Sn}$ | % calculé de composé intermétallique | | Résultats moyens des essais | |
|---|---|---|---|---|---|---|---|---|---|---|
| | Cu | Sn | Sb | Ni | | | $Cu_{12}Sn_7Sb_3$ | $Ni_3Sn$ | PV max (MPA×m/s) | $T_1/T_2$ (°C/°C) |
| 1 | 90 | 10 | 0 | 0 | — | 0 | 0 | 0 | 2,5 | 1,5 |
| 2 | 92 | 6 | 2 | 0 | 3 | 0 | 10 | 0 | 5 | 1,3 |
| 3 | 92 | 5 | 3 | 0 | 1,67 | 0 | 12 | 0 | 6 | 1 |
| 3 bis | 92 | 5 | 3 | 0 | 1,67 | 0 | 12 | 0 | 6 | 1 |
| 4 | 92 | 3 | 5 | 0 | 0,6 | 0 | (7,2) | 0 | 2 | 1,7 |
| 5 | 87 | 7 | 3 | 3 | 1,67 | 1,5 | 12 | 5 | 6,5 | 1 |

**Revendications**

1. Coussinet fritté autolubrifiant en bronze à l'antimoine comportant des phases dispersées (3) plus dures que la matrice (11), caractérisé en ce qu'il a pour composition (% en masse):

Sb 1,5 à 4 %

Sn 5 à 10 %

avec Sn/Sb=1,3 à 3,5

Cu et éventuellemnt Pb et/ou Bi et/ou Zn et impuretés: le solde

avec Pb+Bi limité à 5 % et Zn limité à 5 %,

et en ce que ses phases dispersées (3) consistent chaque en une auréole de diffusion (9, 10) en continuité avec la matrice (11), ladite auréole (9, 11) entourant une microporosité (6) et ayant une composition intermétallique ternaire (Cu, Sn, Sb).

2. Coussinet fritté selon la revendication 1, caractérisé en ce que les auréoles de diffusion (9, 10) ont une dureté $H_{v10}g$ supérieure ou égale à 200.

3. Coussinet fritté autolubrifiant en bronze à l'antimoine comportant des phases dispersées (3) plus dures que la matrice (11) caractérisé en ce qu'il a pour composition globale (% en masse):

Cu 87 %—Sn 7 %—Sb 3 %—Ni 3%

**0 146 481**

et en ce que ses phases dispersées (3) consistent chacune en une auréole de diffusion (9, 10) en continuité avec la matrice (11), lesdites auréoles (9, 10) entourant chacune une microporosité (6) et ayant des compositions intermétalliques des types (Cu, Sn, Sb) et Ni$_3$Sn.

4. Procédé de fabrication de coussinets frittés autolubrifiants dans lequel on mélange intimement des poudres métalliques ainsi qu'éventuellement une poudre de lubrifiant de compression, on comprime ces poudres sous forme d'ébauches de coussinets, on chauffe éventuellement ces ébauches à une température inférieure à 400°C pour éliminer le lubrifiant de compression, on traite thermiquement ces ébauches en atmosphère réductrice pour réaliser le frittage, on refroidit les pièces, on comprime les pièces frittées dans un outillage de calibrage, puis on imprègne d'huile les coussinets obtenus, caractérisé en ce que les poudres métalliques ont comme composition globale (% en masse):

Sb 1,5 à 4 %  
Sn 5 à 10 %  
    avec Sn/Sb=1,3 à 3,5  
Cu et éventuellement Pb et/ou Bi et/ou Zn et impuretés: le solde  
avec Pb+Bi limité à 5 % en Zn limité à 5 %,

et en ce que le traitement thermique des ébauches en atmosphère réductrice est effectué entre 680 et 840°C avec un temps de maintien en température compris entre 5 min et 120 min.

5. Procédé selon la revendication 4, caractérisé en ce qu'on incorpore l'antimoine dans le mélange de poudres métalliques sous forme de poudre d'antimoine pur de grosseur de grain inférieure à 0,06 mm.

6. Procédé selon la revendication 5, caractérisé en ce que le traitement thermique des ébauches en atmosphère réductrice est effectué entre 740 et 820°C avec un temps de maintien en température compris entre 5 min et 45 min.

**Patentansprüche**

1. Gesintertes selbstschmierendes Lager aus Antimonbronze mit dispergierten, gegenüber der Matrix (11) härteren Phasen (3), dadurch gekennzeichnet,  
daß es als Zusammensetzung (in Gew.%):

1,5 bis 4 % Sb  
5 bis 10 % Sn  
    mit Sn/Sb=1,3 bis 3,5  
    Rest Cu und ggf. Pb und/oder Bi und/oder  
Zn und Verunreinigungen mit Begrenzung von  
Pb+Bi bis 5 % und Begrenzung von Zn bis 5 %

hat und daß seine dispergierten Phasen (3) jeweils aus einer Diffusionsaureole (9, 10) in Kontinuität mit der Matrix (11) bestehen, welche Aureole (9, 11) eine Mikroporosität (6) umgibt und eine intermetallische ternärre (Cu, Sn, Sb)-Zusammensetzung hat.

2. Gesintertes Lager nach dem Anspruch 1, dadurch gekennzeichnet,  
daß die Diffusionsaureolen (9, 10) eine Härte $H_{V10g}$ über oder gleich 200 haben.

3. Gesintertes selbstschmierendes Lager aus Antimonbronze mit dispergierten, gegenüber der Matrix (11) härteren Phasen (3), dadurch gekennzeichnet,  
daß es als Gesamtzusammensetzung (in Gew.%):

87 % Cu—7 % Sn—3 % Sb—3 % Ni

hat und daß seine dispergierten Phasen (3) jeweils aus einer Diffusionsaureole (9, 10) in Kontinuität mit der Matrix (11) bestehen, welche Aureolen (9, 10) jeweils eine Mikroporosität (6) umgeben und intermetallische Zusammensetzungen der Typen (Cu, Sn, Sb) und Ni$_3$ Sn haben.

4. Verfahren zur Herstellung gesinterter selbstschmierender Lager, bei dem man metallische Pulver sowie ggf. ein Kompressionsschmierpulver innig vermischt, diese Pulver in Form von Lagervorprodukten komprimiert, diese Vorprodukte ggf. auf eine Temperatur unter 400°C zur Beseitigung des Kompressionsschmiermittels erhitzt, diese Vorprodukte in reduzierender Atmosphäre zur Durchführung der Sinterung wärmebehandelt, die Teile abkühlt, die gesinterten Teile in einer Kalibriervorrichtung komprimiert und dann die erhaltenen Lager mit Öl imprägniert, dadurch gekennzeichnet,  
daß die metallischen Pulver als Gesamtzusammensetzung (in Gew.%):

1,5 bis 4 % Sb  
5 bis 10 % Sn  
    mit Sn/Sb=1,3 bis 3,5  
Rest Cu und ggf. Pb und/oder Bi und/oder Zn und Verunreinigungen  
mit Begrenzung von Pb+Bi bis 5 % und Begrenzung von Zn bis 5 %

7

**0 146 481**

haben und daß die Wärmebehandlung der Vorprodukte in reduzierender Atmosphäre zwischen 680 und 840°C mit einer Haltezeit bei der Temperatur zwischen 5 min und 120 min erfolgt.

5. Verfahren nach dem Anspruch 4, dadurch gekennzeichnet,

daß man das Antimon in das Gemisch metallischer Pulver in Form von Reinantimonpulver einer Korngröße unter 0,06 mm einbringt.

6. Verfahren nach dem Anspruch 5, dadurch gekennzeichnet,

daß die Wärmebehandlung in reduzierender Atmosphäre zwischen 740 und 820°C mit einer Haltezeit bei der Temperatur zwischen 5 min und 45 min erfolgt.

**Claims**

1. A self-lubricating sintered bearing of antimony bronze comprising dispersed phases (3) which are harder than the matrix (11) characterised in that it is of the following composition (% by weight):

Sb 1.5 to 4%
Sn 5 to 10%
    with Sn/Sb=1.3 to 3.5
Cu and optionally Pb and/or Bi and/or Zn and impurities: balance,
with Pb+Bi limited to 5% and Zn limited to 5%

and that its disposed phases (3) each consist of a diffusion halo (9, 10) in a condition of continuity with the matrix (11), said halo (9, 11) surrounding a microporosity (6) and being of a ternary intermetallic composition (Cu, Sn, Sb).

2. A sintered bearing according to claim 1 characterised in that the diffusion halos (9, 10) are of a hardness $H_{V10g}$ of greater than or equal to 200.

3. A self-lubricating sintered bearing of antimony bronze comprising dispersed phases (3) which are harder than the matrix (11) characterised in that it is of the following overall composition (% by weight):

Cu 87%—Sn 7%—Sb 3%—Ni 3%

and that its dispersed phases (3) each consist of a diffusion halo (9, 10) in a condition of continuity with the matrix (11), said halos (9, 10) each surrounding a microporosity (6) and being of ternary intermetallic compositions of the types (Cu, Sn, Sb) and $Ni_3Sn$.

4. A process for the production of self-lubricating sintered bearings comprising intimately mixing metal powders and optionally a compression lubricant powder, compressing said powders in the form of blanks, optionally heating said blanks at a temperature of less than 400°C to remove the compression lubricant, subjecting said blanks to a heat treatment in a reducing atmosphere to effect sintering, cooling the components, compressing the sintered components in a calibration tool, and then impregnating the bearings produced with oil, characterised in that the overall composition of the metal powders is as follows (% by weight):

Sb 1.5 to 4%
Sn 5 to 10%
    with Sn/Sb=1.3 to 3.5
Cu and optionally Pb and/or Bi and/or Zn and impurities: balance,
with Pb+Bi limited to 5% and Zn limited to 5%

and that the heat treatment of the blanks in a reducing atmosphere is carried out at from 680 to 840°C with a temperature hold time of from 5 minutes to 120 minutes.

5. A process according to claim 4 characterised in that antimony is incorporated into the mixture of metal powders in the form of pure antimony powder, with a grain size of less than 0.06 mm.

6. A process according to claim 5 characterised in that the heat treatment of the blanks in a reducing atmosphere is carried out at from 740 to 820°C with a temperature hold time of from 5 minutes to 45 minutes.

température $^0$C

FIG.1

FIG.2

FIG.3